# EUROPÄISCHE PATENTSCHRIFT

(11) **EP 2 368 944 B1**
(45) Veröffentlichungstag und Bekanntmachung des Hinweises auf die Patenterteilung: **21.08.2019**
(21) Anmeldenummer: 11450036.6
(22) Anmeldetag: 15.03.2011
(51) Int. Cl.: C09D 5/00, C09D 5/20, C09D 5/32, C03C 17/32, E06B 7/28

(54) **Folienbildendes Infrarotabsorbierendes Beschichtungsmittel**
Infrared Absorbing Coating agent which forms a film
Produit de revêtement absorbant rayonnement infrarouge et formant des feuilles

(30) Priorität: 25.03.2010 AT 4842010
(43) Veröffentlichungstag der Anmeldung: 28.09.2011
(73) Patentinhaber: Lengheim, Hubert, 2213 Bockfliess (AT)
(72) Erfinder: Lengheim, Hubert, 2213 Bockfliess (AT)
(74) Vertreter: Sonn & Partner Patentanwälte

(56) Entgegenhaltungen:
- WO-A1-2009/026438
- WO-A1-2010/010159
- US-A1- 2004 071 957
- US-A1- 2007 054 216

## Beschreibung

Die vorliegende Erfindung betrifft ein folienbildendes Beschichtungsmittel mit einem Wasseranteil von mindestens 10%, das in getrocknetem Zustand eine leicht und rückstandsfrei ablösbare Folie mit hoher mechanischer Festigkeit und klebenden Eigenschaften bildet.

Die aus diesem Beschichtungsmittel gebildete Folie kann erfindungsgemäß auf Verglasungen bzw. Kunststoffverglasungen zum Einsatz für sommerlichen und winterlichen Wärmeschutz aufgebracht werden.

Steigende Anforderungen an Energiesparmaßnahmen im Bereich der Gebäudebeheizung sowie Gebäudekühlung erfordern wärmedämmende Maßnahmen, sowohl zur Reduktion des Wärmeverlustes während der Heizperioden als auch zur Vermeidung übermäßiger Raumaufheizung bei hohen Außentemperaturen. Für eine energieeffiziente Temperierung von Gebäuden, und somit zur Reduktion des CO₂ Ausstoßes, ist es wesentlich, wärmedämmende Maßnahmen auf einem möglichst großen Teil der Außenflächen anzuwenden. So werden wärmedämmende Fassadenplatten bzw. Verbundelemente auf Gebäudeaußenwände aufgebracht, oder die Außenwände werden bereits im Rahmen des Fertigungsprozesses mit entsprechenden wärmedämmenden Eigenschaften versehen. Ebenso ist die Reduktion des Wärmeüberganges durch oberste Geschoßdecken ein effizientes Mittel um Heizkosten zu sparen und den CO₂ Ausstoß zu reduzieren. Allerdings stellen Fensterflächen auch einen nicht zu vernachlässigenden und insbesondere bei modernen Bürogebäuden erheblichen Anteil der Gebäudeaußenfläche dar. Während moderne Fenster zunehmend verbesserte wärmedämmende Eigenschaften aufweisen, sind in Anbetracht der großen Glasflächen von Bürogebäuden weitergehende Maßnahmen gefordert. Des Weiteren finden sich vor allem in älteren Gebäuden oft auch ältere Fenster, die zu einem erheblichen Energieverlust beitragen. Ältere Gebäude können zur Reduktion des Wärmeüberganges durch die Außenwände mit dämmenden Fassadenplatten nachgerüstet werden, ein Austausch der Fenster hingegen ist oftmals aus Kostengründen nicht ohne weiteres zumutbar. Aus diesen Gründen ist es wünschenswert, mit einfachen und kostengünstigen Mitteln moderne Fenster mit zusätzlichen Maßnahmen zur Wärmedämmung auszurüsten sowie insbesondere ältere Fenster mit solch einer Methode nachzurüsten.

Sonnenenergiesteuernde Folien zur Reduktion der Wärmeeinstrahlung in Räume, die dünne Metallschichten (unter 100 nm) auf Glas- oder Polymersubstraten aufweisen, sind zur Modifizierung der Durchlässigkeit eines Fensters gegenüber Strahlungsenergie bekannt. So beschreibt die US 3 290 203 B eine transparente, reflektierende, metallisierte Polyesterfolie, die auf der Innenseite eines Fensters angebracht werden kann. Metallisierte Folien besitzen die Eigenschaft den Durchgang von Strahlungsenergie im Infrarotbereich zu reduzieren. Auch die US 3 152 950 B offenbart eine metallisierte, reflektierende Polyesterschutzfolie, die auf Holz, Metall und Glas haftet.

Werden diese Metallbeschichtungen auf Polymerfolien bzw. -filme und anschließend auf Glas aufgebracht, steht der Anwender vor dem Problem, die Schicht nicht mehr auf einfache Weise vom Glas entfernen zu können falls er dies wünscht.

Die US 2007/054216 A1 offenbart eine Mehrlagenbeschichtung für Plasmabildschirme, die auf beiden Seiten eines biaxial gestreckten Polyethylenterephthalat aufgebracht wird und deren Infrarot absorbierende Schicht eine Polymer-Dispersion, eine Kombination von Gelatine und einer Dispersion eines thermoplastischen Harzes, ein nahes Infrarot absorbierendes, -C=0 enthaltendes Färbemittel, ein perfluoriertes Tensid und ein Trennmittel enthält.

Die DE 689 05 111 T2 offenbart eine energiesteuernde Folie, welche eine Polyolefin- oder eine Polyolefin-Copolymerschicht aufweist, die aufschrumpfbar ist und den Durchgang von Strahlungsenergie begrenzt. Die Folie ist durch Aufschrumpfen an Fensteranordnungen anbringbar, z.B. an einem Fensterrahmen, oder kann alternativ unmittelbar auf Glas aufgebracht werden. Für diese alternative Anbringung ist jedoch ein doppelseitiges Klebeband und die Anwendung der Reck/Schrumpf-Installationstechnik nötig.

Diese bekannten Methoden weisen den Nachteil auf, dass die sonnenenergiesteuernden bzw. den Wärmedurchgang verringernden Schichten als Folien ausgebildet sind, die weder mit einfachen Methoden angebracht, noch bei Bedarf einfach entfernt werden können. So kann es in der kalten Jahreszeit vorteilhaft sein die Folie zu entfernen, um die Sonneneinstrahlung der niedrig stehenden Sonne zu nutzen, oder die Folie auf der Innenseite der Fenster anzubringen. Dies erfordert jedoch die Möglichkeit die Folie möglichst einfach aufbringen und rückstandsfrei entfernen zu können. Die Folien der bekannten Art sind weiters für Wärmestrahlung reflektierend ausgebildet, wodurch, um Wärmestrahlung in hohem Maß zu reflektieren um eine möglichst hohe Energieeinsparung zu erzielen, auch Licht im sichtbaren Bereich stark reflektiert wird. Dies hat unangenehme Lichtbedingungen in den Räumen zur Folge. In der kalten Jahreszeit wäre es zudem wünschenswert, wenn die Folie selbst Wärme absorbieren würde, um eine zusätzliche Wärmequelle zu bilden. Dies ist jedoch mit reflektierenden Folien nicht möglich.

Aus der JP 8-165444 A ist ein wasserlösliches Beschichtungsmittel bekannt, welches zur Entfernung zwingend durch Wasser abgewaschen, also abgelöst werden muss.

Es ist daher eine Aufgabe der vorliegenden Erfindung für sowohl sommerlichen als auch winterlichen Wärmeschutz eine möglichst einfache Methode bereit zu stellen, welche die Nachteile der bekannten sonnenenergiereflektierenden Folien beseitigt. Die Folie soll mit einfachen Mitteln aufgebracht und wieder entfernt werden können und in möglichst hohem Ausmaß die durchgehende Wärmestrahlung reduzieren, während sie für sichtbares Licht weitgehend transparent sein soll.

Diese Aufgabe wird erfindungsgemäß durch ein folienbildendes Beschichtungsmittel gelöst, welches eine ein Teilspektrum der auf der beschichteten Oberfläche eintreffenden elektromagnetischen Strahlung absorbierende Polymer-Dispersion ist, welches weiterhin Trennmittel aufweist und für die Absorption von Strahlung im Infrarotbereich amorphe Kieselsäure mit einer Helligkeit gemessen laut Prüfvorschrift 10/EMQ33 in Anlehnung an DIN 53163 von größer 80 und einer Ölzahl gemessen laut Prüfvorschrift 10/EMQ20 in Anlehnung an DIN ISO 787-5 von im Bereich von 40 g/100 g bis 60 g/100 g, insbesondere im Bereich von 45 g/100 g bis 55 g/100 g, enthält, wobei die endgültige Beschichtung eine Schichtdicke von etwa 0,5 mm bis etwa 2 mm aufweist. Das Beschichtungsmittel wird in flüssigem Zustand auf die zu beschichtende Verglasung aufgebracht, und bildet nach seiner Trocknung eine Folie, die einfach, ohne nennenswerten Kraftaufwand und rückstandsfrei wieder abgezogen werden kann. Die Polymer-Dispersion weist einen Wasseranteil von mindestens 10% auf und kann bei Bedarf mit Wasser weiter verdünnt werden. Beschichtungsmittel auf Basis von Lösungsmitteln könnten die oben genannte Aufgabe auch lösen aus ökologischen Gründen wird jedoch Wasser bevorzugt. Das Beschichtungsmittel absorbiert dabei Strahlung im Infrarotbereich. Infrarotstrahlung, auch allgemein als Wärmestrahlung bekannt, erwärmt einen absorbierenden Körper stärker als dies sichtbares Licht kann. Da bei der Gebäudeheizung bzw. -kühlung ein Teil der Wärmeübertragung über Wärmestrahlung erfolgt, führt eine Reduktion des elektromagnetischen Strahlungsanteiles im Infrarotbereich, der durch Verglasungen hindurchtritt, zu einer Reduktion der Wärmeübertragung. Diese Reduktion erfolgt durch Absorbtion eines vorzugsweise überwiegenden Teiles der auf die Verglasung auftreffenden Infrarotstrahlung durch die aus dem Beschichtungsmittel entstehende Folie. Der Rest der Infrarotstrahlung wird transmittiert bzw. reflektiert. Erfindungsgemäß enthält das Beschichtungsmittel Bestandteile, welche die Absorbtion der Infrarotstrahlung ermöglichen, ohne jedoch den Durchgang von sichtbarem Licht merkbar zu reduzieren.

Die Helligkeit Y wird durch den Normfarbwert gekennzeichnet und ist ein Maß für die Stärke einer Lichtempfindung. Der Normfarbwert wird mit einem Spektralphotometer an Füllstoffpulvern in gepresster Form bestimmt. Die Prüfung von Pigmenten und Füllstoffen sowie die Bestimmung der Helligkeit von Füllstoff- und Weißpigment-Pulvern ist in der DIN 53163 beschrieben.

Die Ölzahl ist eine wichtige Pigmenteigenschaft und gibt eine Aussage über dessen Verhalten während der Dispergierung. Sie gibt die Menge Öl in Gramm an, die benötigt wird, um 100 g Pigment zu einer zusammenhaftenden, kittartigen Masse zu verarbeiten. Diese Ölmenge hängt stark von der Art und Weise ab, in der das Öl eingearbeitet wird.

Der Fachmann wird mit diesen Begriffen vertraut sein, weshalb nicht weiter auf deren Definition eingegangen wird.

Erfindungsgemäß weist das Absorptionsmittel eine Helligkeit größer 80 und eine Ölzahl im Bereich von 40 g/100 g bis 60 g/100 g insbesondere im Bereich von 45 g/100 g bis 55 g/100 g auf.

Einige beispielhafte Vertreter geeigneter Absorptionsmittel basierend auf amorpher Kieselsäure sind in Tabelle 1 und 2 aufgelistet, wobei darauf hingewiesen wird, dass diese Auflistung keinesfalls als vollständig zu verstehen ist.

**Tabelle 1**

| | Helligkeit Y | Ölzahl [g/100g] |
|---|---|---|
| | Prüfvorschrift | Prüfvorschrift |
| | 10/EMQ33 | 10/EMQ20 |
| | In Anlehnung an DIN 53163 | In Anlehnung an DIN ISO 787-5 |
| Sillitin V85 | 82 | 45 |
| Sillitin V88 | 86 | 47 |
| Sillitin N85 | 82 | 45 |
| Sillitin N87 | 83 | 45 |
| Sillitin Z86 | 82 | 55 |
| Sillitin Z89 | 86 | 55 |
| Sillikolloid P87 | 82 | 55 |

Tabelle 2 gibt den mineralogischen Aufbau dieser beispielhaften Vertreter an.

**Tabelle 2**

| Mineralogischer Aufbau | Kryptokristalline und amorphe Kieselsäure [%] | Kaolinit [%] | Begleitmineralien [%] |
|---|---|---|---|
| Sillitin V85 | 75 | 20 | 5 |
| Sillitin V88 | 78 | 17 | 5 |
| Sillitin N85 | 70 | 25 | 5 |
| Sillitin N87 | 70 | 25 | 5 |
| Sillitin Z86 | 65 | 30 | 5 |
| Sillitin Z89 | 70 | 25 | 5 |
| Sillikolloid P87 | 60 | 35 | 5 |

Gemäß einer weiteren Ausführungsform der vorliegenden Erfindung absorbiert das Beschichtungsmittel einen möglichst hohen Anteil der auf die Verglasung eintreffenden Infrarotstrahlung, um den Wärmetransport mittels Wärmestrahlung möglichst stark zu reduzieren. Der für die Absorption relevante und den Infrarotbereich kennzeichnende Wellenlängenbereich liegt hierbei bei größer ungefähr 780 nm. Erfindungsgemäß werden, bei einer Schichtdicke von etwa 1 mm, höchstens 15% der auf die beschichtete Verglasung einfallenden Strahlung im Infrarot-Wellenlängenbereich transmittiert. Für die Bestimmung des Transmissionswertes wurde ein mit der infrarotabsorbierenden Beschichtung versehener Glasprüfkörper mit einem unbeschichteten Glasprüfkörper mittels Wellenlängenscan unter Verwendung eines UV-VIS Gerätes (UV-3600 Shimadzu) verglichen.

Bei einer Anordnung des Beschichtungsmittels auf einer Glasfläche ist es bezüglich der Absorption der Infrarotstrahlung möglich, die Beschichtung auf der Innen- oder Außenseite aufzubringen. Ferner wird sowohl in einen Raum eintretende als auch aus dem Raum austretende Wärmestrahlung gleich wirksam reduziert.

Gemäß einer bevorzugten Ausführungsform der vorliegenden Erfindung wird sichtbares Licht beim Durchgang durch das infrarotabsorbierende Beschichtungsmittel nur zu einem möglichst geringen Anteil absorbiert bzw. reflektiert. Der für die Transmission relevante und den sichtbaren Lichtanteil kennzeichnende Wellenlängenbereich liegt hierbei zwischen ungefähr 380 nm und ungefähr 780 nm. Erfindungsgemäß werden, bei einer Schichtdicke von etwa 1 mm, zumindest 75% der auf die beschichtete Verglasung einfallenden Strahlung im Wellenlängenbereich des sichtbaren Lichtes transmittiert. Für die Bestimmung des Transmissionswertes wurde die selbe Prüfanordnung wie für die Bestimmung der Transmissionsfähigkeit für Infrarotstrahlung benutzt. Dieser Transmissionswert wird unabhängig davon, ob das infrarotabsorbierende Beschichtungsmittel auf der Innen- oder Außenseite der Verglasung aufgebracht ist, erzielt.

Erfindungsgemäß bildet das Beschichtungsmittel nach dessen Trocknung eine rückstandsfrei und leicht abziehbare Folie. Diese Eigenschaft wird der Folie mittels eines dem Beschichtungsmittel zugefügten Trennmittels verliehen. Das Trennmittel ist vorzugsweise aus der Gruppe umfassend mehrwertige Alkohole, synthetische Trennmittel und Tenside, sowie Kombinationen hiervon, ausgewählt. Als beispielhafte Vertreter wurden Glycerin in 99% PhEur Qualität aus der Gruppe der mehrwertigen Alkohole, Silikonöle aus der Gruppe der synthetischen Trennmittel, und modifizierte, mehrwertige, aliphatische Alkohole, insbesondere Glycerinethoxylat, aus der Gruppe der Tenside erfolgreich getestet.

Die Eigenschaft der leichten Abziehbarkeit wurde subjektiv beurteilt. Die leichte Abziehbarkeit der infrarotabsorbierenden Folie stellt eine wesentliche Verbesserung gegenüber bekannten sonnenenergiesteuernden Folien dar, da sie eine temporäre oder dauerhafte, den Anforderungen des Benutzers, sowie den Witterungsbedingungen anpassbare Vorrichtung zur Reduktion des Wärmedurchganges durch Verglasungen darstellt. Beispielsweise kann die Folie im Sommer auf der Außenseite eines Fensters angebracht werden. Die Folie wird hierbei durch die vorbeistreichende Luft gekühlt. Im Winter kann die Folie, um den Wärmeverlust eines beheizten Raumes durch Wärmestrahlung zu reduzieren, auf der Innenseite des Fenster aufgebracht werden. Eine Erwärmung der Folie durch Absorption der Infrarotstrahlung ist in diesem Fall ein zusätzlicher Vorteil, da hiermit die innere Fensterfläche als zusätzliche Wärmequelle fungiert.

Gemäß einer weiteren Ausführungsform der vorliegenden Erfindung enthält das Beschichtungsmittel weiters ein Entschäumungsmittel, um auf der zu beschichtenden Oberfläche einen gleichmäßigen Film ohne Lufteinschlüsse zu bilden, und die für Fensterverglasungen vom Benutzer erwartete Qualität der Transparenz zu gewährleisten. Die Beimengung von Entschäumungsmitteln, um transparente, selbstklebende und abziehbare Folien zu erhalten, ist dem Fachmann bekannt und wird deshalb hier nicht weiter erörtert.

Als erfindungsgemäßes Beispiel eines Entschäumungsmittels wurde das Produkt Silfoam® SE 57 (Wacker Chemie AG, Deutschland) erfolgreich getestet.

Gemäß einer weiteren Ausführungsform der Erfindung enthält das Beschichtungsmittel weiters ein Korrosionsschutzmittel, um metallische Untergründe (z.B. metallische Fensterrahmen oder Fassadenelemente) vor Korrosion zu schützen, die gemäß einer der Ausführungsformen der Erfindung mit dem Trennmittel, das mehrwertigen Alkohol aufweisen kann, in Kontakt kommen können. Als erfindungsgemäßes Beispiel eines Korrosionsschutzmittels wurde das Produkt POLYGON PCG 1909 (POLYGON CHEMIE AG, Schweiz), ein Korrosionsinhibitor für Eisen, Stahl und Buntmetalle in sauren nicht oxidativen Medien, erfolgreich getestet.

Gemäß noch einer Ausführungsform der vorliegenden Erfindung enthält das Beschichtungsmittel weiters Pigmente. Die infrarotabsorbierende Folie kann somit durch gezielte Beimengung von Pigmenten mit einem Farbton versehen werden. Die Farbstärke lässt sich hierbei mittels der Menge der beigefügten Pigmente steuern. Beispielsweise können Farbtöne beigemengt werden, die dem Benutzer besonders angenehm erscheinen, dem Raum eine spezielle Farbgebung verleihen, und somit eine positive Auswirkung auf die Stimmung des Benutzers haben. Hieraus ist erneut ein Vorteil der leichten Abziehbarkeit erkennbar, da die Folie somit leicht und mittels eines neuerlichen Beschichtungsvorganges gegen Folien anderer Farbgebung ausgetauscht werden kann.

Gemäß einer weiteren Ausführungsform der vorliegenden Erfindung ist die Polymer-Dispersion eine Kombination von mindestens zwei Polymer-Dispersionen. Der Vorteil von zumindest einer zweiten Polymer-Dispersion ist, dass die rascher abbindende der beiden Komponente über dem Trennmittel eine permanente Abbindung mit der Verglasung verhindert, da die andere Komponente erst nach der ersten aushärtet. Ferner ist die mindestens zweite Polymer-Dispersion als Anreibemedium für Pigmente geeignet und gewährleistet verbesserte Bewitterungsstabilität.

Als erfindungsgemäßes Beispiel einer kombinierten Polymer-Dispersion wurde das Produkt Mowilith® LDM 1865 (Celanese Corporation, USA), eine wässrige Polymer-Dispersion auf Basis von Vinylacetat, Ethylen und Methacrylsäureestern, erfolgreich getestet.

Die verbesserte Bewitterungsstabilität dieser beispielhaften Polymer-Dispersion wurde in einer SOL 2 Sonnenlicht Testkammer erfolgreich getestet. Hierbei wurde die aus der kombinierten Polymer-Dispersion durch Trocknung entstandenen Folie einem bis zu 6,5 fachen der natürlichen Sonneneinstrahlung ausgesetzt. Ferner wurde die Folie einem Temperaturbereich von -20° C bis +45° C ausgesetzt und ließ sich anschließend rückstandsfrei entfernen.

Die wässrige Polymer-Dispersion lässt sich mit einfachen Mitteln, wie Rollen, Streichen oder Spritzen, in einem Temperaturbereich von 0° C bis 35° C, bevorzugt in einem Temperaturbereich von 10° C bis 25° C auf der Verglasung auftragen. Vorteilhafter Weise kann das Auftragen mit einer mit einem Sprühkopf versehenen Sprühflasche erfolgen. Die Sprühflaschen können mit Sprühpumpen ausgestattet sein oder ein Treibmittel verwenden. Um noch höhere Absorptionswerte für Infrarotstrahlung zu erreichen, lässt sich auf die aufgetragene Beschichtung zumindest eine weitere Beschichtung auftragen.

Gemäß einer weiteren Ausführungsform der Erfindung wird das Beschichtungsmittel für die Beschichtung von Verglasungen bzw. Kunststoffverglasungen verwendet. Hieraus ergibt sich eine Vielzahl von Anwendungsmöglichkeiten, beispielsweise reduziert die außen auf eine Fensterscheibe von Wohnräumen oder Büros aufgebrachte erfindungsgemäße Beschichtung die Aufheizung der Räume durch Sonneneinstrahlung. Ebenso wird durch eine auf die Innenseite einer Fensterscheibe aufgebrachte erfindungsgemäße Beschichtung während des Heizbetriebes die Wärmeabstrahlung aus dem Wohnraum in die Umgebung reduziert, wobei die durch das Trennmittel gebildete Schicht eine zusätzliche wärmedämmende Wirkung hat. Eine weitere Anwendung findet sich im Bereich der Transportmittel. So reduzieren erfindungsgemäß innen oder außen beschichtete Fenster und Schiebedächer in Kraftfahrzeugen die für die Klimatisierung bzw. Beheizung des Fahrzeuges nötige Energie. Ebenso lassen sich die Verglasungen oder Kunststoffverglasungen von Zügen, Schiffen oder Flugzeugen ausrüsten.

Da die Folie hohe mechanische Festigkeit aufweist, bietet sie neben der infrarotabsorbierenden Eigenschaft auch Schutz vor mechanischen Schäden, wie Steinschlag oder Zerkratzen, sowie vor Verschmutzung der darunter liegenden Verglasung. Verglasungen können somit auch bereits mit der darauf aufgebrachten Beschichtung an einen Benutzer ausgeliefert werden, wodurch hierbei Schutz vor Beschädigung geboten wird.

Die Anwendung der Beschichtung ist jedoch nicht auf Verglasungen beschränkt, da die Beschichtung generell darunter liegende Oberflächen, beispielsweise lackierte Oberflächen, in einem hohen Maß vor Infrarotstrahlung und somit vor bewitterungsbedingten Schäden schützt.

Ein weiterer möglicher Anwendungsbereich sind Gewächshäuser in derem Inneren bestimmte vordefinierte Temperaturverhältnisse erforderlich sind. Reduzierter Wärmedurchgang im Sommer und Winter reduzieren den für die Klimatisierung erforderlichen Energieaufwand in hohem Maße.

Gemäß einer weiteren Ausführungsform der vorliegenden Erfindung wird das infrarotabsorbierende Beschichtungsmittel auf beiden Seiten einer Verglasung bzw. auf mehreren hintereinander liegenden Verglasungen aufgebracht. Hierbei wirken die zusätzlich aufgebrachten Beschichtungen als weitere Dämmschicht für Transmission von Infrarotstrahlung.

Auch wenn voranstehend einige Beispiele aufgezählt wurden, ist es für den Fachmann nachvollziehbar, dass die Anwendungsmöglichkeiten auch andere, nicht aufgezählte Bereiche betreffen können.

Ebenso schließt die Bezeichnung "Verglasung" auch Kunststoffverglasungen mit ein.

## Patentansprüche

1. Folienbildendes Beschichtungsmittel mit einem Wasseranteil von mindestens 10 %, das in getrocknetem Zustand eine leicht und rückstandsfrei ablösbare Folie mit hoher mechanischer Festigkeit und klebenden Eigenschaften bildet, **dadurch gekennzeichnet, dass** das Beschichtungsmittel eine ein Teilspektrum der auf der beschichteten Oberfläche eintreffenden elektromagnetischen Strahlung absorbierende Polymer-Dispersion ist, welches weiterhin Trennmittel aufweist und für die Absorption von Strahlung im Infrarotbereich amorphe Kieselsäure mit einer Helligkeit gemessen laut Prüfvorschrift 10/EMQ33 in Anlehnung an DIN 53163 von größer 80 und einer Ölzahl gemessen laut Prüfvorschrift 10/EMQ20 in Anlehnung an DIN ISO 787-5 von im Bereich von 40 g/100 g bis 60 g/100 g, insbesondere im Bereich von 45 g/100 g bis 55 g/100 g, enthält, wobei die endgültige Beschichtung eine Schichtdicke von etwa 0,5 mm bis etwa 2 mm aufweist.

2. Beschichtungsmittel nach Anspruch 1, **dadurch gekennzeichnet, dass** es höchstens 15 % der auf die beschichtete Oberfläche einfallenden Strahlung im Infrarot-Wellenlängenbereich von größer 780 nm transmittiert.

3. Beschichtungsmittel nach einem der Ansprüche 1 oder 2, **dadurch gekennzeichnet, dass** es zumindest 75 % der auf die beschichtete Oberfläche einfallenden Strahlung im sichtbaren Wellenlängenbereich von 380 nm bis 780 nm transmittiert.

4. Beschichtungsmittel nach einem der Ansprüche 1 bis 3, **dadurch gekennzeichnet, dass** das Trennmittel aus der Gruppe umfassend mehrwertige Alkohole, synthetische Trennmittel, und Tenside, sowie Kombinationen hiervon ausgewählt ist.

5. Beschichtungsmittel nach einem der Ansprüche 1 bis 4, **dadurch gekennzeichnet, dass** es weiters ein Entschäumungsmittel enthält.

6. Beschichtungsmittel nach einem der Ansprüche 1 bis 5, **dadurch gekennzeichnet, dass** es weiters ein Korrosionsschutzmittel enthält.

7. Beschichtungsmittel nach einem der Ansprüche 1 bis 6, **dadurch gekennzeichnet, dass** es weiters Pigmente enthält.

8. Beschichtungsmittel nach einem der Ansprüche 1 bis 7, **dadurch gekennzeichnet, dass** die Polymer-Dispersion eine Kombination von mindestens zwei Polymer-Dispersionen ist.

9. Verwendung des Beschichtungsmittels nach einem der vorhergehenden Ansprüche für die Beschichtung von Verglasungen bzw. Kunststoffverglasungen.

10. Verfahren zum Beschichten von Verglasungen mit einem Beschichtungsmittel nach einem der Ansprüche 1 bis 8, **dadurch gekennzeichnet, dass** es auf beiden Seiten der Verglasung, bzw. auf mehreren hintereinander liegenden Verglasungen aufgebracht wird.

## Claims

1. Film-forming coating agent having a water content of at least 10%, which agent forms a film that can be removed readily and without residue and has high mechanical strength and adhesive properties when dried, **characterised in that** the coating agent is a polymer dispersion which absorbs a partial spectrum of the electromagnetic radiation incident on the coated surface and further comprises a release agent and, for the absorption of radiation in the infrared range, contains amorphous silicic acid having a brightness measured according to test specification 10/EMQ33, in line with DIN 53163, of greater than 80 and an oil absorption value measured according to test specification 10/EMQ20, in line with DIN ISO 787-5, in the range from 40 g/100 g to 60 g/100 g, in particular in the range from 45 g/100 g to 55 g/100 g, the final coating having a layer thickness from approximately 0.5 mm to approximately 2 mm.

2. Coating agent according to claim 1, **characterised in that** it transmits at most 15% of the radiation incident on the coated surface in the infrared wavelength range greater than 780 nm.

3. Coating agent according to either claim 1 or claim 2, **characterised in that** it transmits at least 75% of the radiation incident on the coated surface in the visible wavelength range from 380 nm to 780 nm.

4. Coating agent according to any of claims 1 to 3, **characterised in that** the release agent is selected from the group comprising polyhydric alcohols, synthetic release agents and surfactants, as well as combinations thereof.

5. Coating agent according to any of claims 1 to 4, **characterised in that** it further contains a defoaming agent.

6. Coating agent according to any of claims 1 to 5, **characterised in that** it further contains a corrosion inhibitor.

7. Coating agent according to any of claims 1 to 6, **characterised in that** it further contains pigments.

8. Coating agent according to any of claims 1 to 7, **characterised in that** the polymer dispersion is a combination of at least two polymer dispersions.

9. Use of the coating agent according to any of the preceding claims for the coating of glazings or plastics glazings.

10. Method for coating glazings with a coating agent according to any of claims 1 to 8, **characterised in that** it is applied on both sides of the glazing, or on a plurality of glazings positioned one behind the other.

## Revendications

1. Composition de revêtement feuillogène présentant une teneur en eau d'au moins 10 %, qui à l'état séché forme une feuille détachable facilement et sans résidus, présentant une grande résistance mécanique et des propriétés adhésives, **caractérisée en ce que** la composition de revêtement est une dispersion polymère absorbant un spectre partiel du rayonnement électromagnétique tombant sur la surface revêtue, composition qui comprend en outre des agents de séparation, et qui, pour l'absorption du rayonnement dans la gamme infrarouge, contient de la silice amorphe présentant une luminosité, mesurée selon la spécification d'essai 10/EMQ33 se fondant sur DIN 53163, supérieure à 80 et une prise d'huile, mesurée selon la spécification d'essai 10/EMQ20 se fondant sur DIN ISO 787-5, comprise dans la plage de 40 g/100 g à 60 g/100 g, en particulier dans la plage de 45 g/100 g à 55 g/100 g, le revêtement final présentant une épaisseur de couche d'environ 0,5 mm à environ 2 mm.

2. Composition de revêtement selon la revendication 1, **caractérisée en ce qu'**elle transmet au plus 15 % du rayonnement tombant sur la surface revêtue, dans la gamme des longueurs d'onde infrarouges supérieures à 780 nm.

3. Composition de revêtement selon l'une des revendications 1 ou 2, **caractérisée en ce qu'**elle transmet au moins 75 % du rayonnement tombant sur la surface revêtue, dans la gamme des longueurs d'onde visibles de 380 nm à 780 nm.

4. Composition de revêtement selon l'une des revendications 1 à 3, **caractérisée en ce que** l'agent de séparation est choisi dans le groupe comprenant les polyalcools, les agents de séparation synthétiques et les tensioactifs, ainsi que les combinaisons de ceux-ci.

5. Composition de revêtement selon l'une des revendications 1 à 4, **caractérisée en ce qu'**elle contient en outre un agent démoussant.

6. Composition de revêtement selon l'une des revendications 1 à 5, **caractérisée en ce qu'**elle contient en outre un agent anticorrosion.

7. Composition de revêtement selon l'une des revendications 1 à 6, **caractérisée en ce qu'**elle contient en outre des pigments.

8. Composition de revêtement selon l'une des revendications 1 à 7, **caractérisée en ce que** la dispersion polymère est une combinaison d'au moins deux dispersions polymères.

9. Utilisation de la composition de revêtement selon l'une des revendications précédentes pour le revêtement de vitrages ou de vitrages plastiques.

10. Procédé pour revêtir des vitrages à l'aide d'une composition de revêtement selon l'une des revendications 1 à 8, **caractérisé en ce qu'**elle est appliquée sur les deux faces du vitrage, ou sur plusieurs vitrages disposés les uns derrière les autres.
